# EUROPÄISCHE PATENTSCHRIFT

(11) **EP 2 473 709 B1**
(45) Veröffentlichungstag und Bekanntmachung des Hinweises auf die Patenterteilung: **02.10.2013**
(21) Anmeldenummer: 10743095.1
(22) Anmeldetag: 10.08.2010
(51) Int. Cl.: F01D 5/02

(54) **ROTORWELLE FÜR EINE DAMPFTURBINE**
ROTOR SHAFT FOR A STEAM TURBINE
ARBRE DE ROTOR POUR UNE TURBINE À VAPEUR

(30) Priorität: 02.09.2009 DE 102009039824
(43) Veröffentlichungstag der Anmeldung: 11.07.2012
(73) Patentinhaber: Siemens Aktiengesellschaft, 80333 München (DE)
(72) Erfinder: BERENDT, Oliver, 02826 Görlitz (DE); VÖLKER, Lutz, 02826 Görlitz (DE)
(86) Internationale Anmeldenummer: PCT/EP2010/061589
(87) Internationale Veröffentlichungsnummer: WO 2011/026715

(56) Entgegenhaltungen:
- EP-A1- 1 898 047
- EP-A1- 1 898 048
- EP-A2- 1 243 754
- US-A- 5 106 012
- US-A1- 2005 281 677
- CARL-GUSTAF HJORTH: "Hot Isostatic Processing of Large Near Net Shape Components for Industrial Applications", EXPLORATION AND PRODUCTION - OIL AND GAS REVIEW ISSUE II, 1. November 2007 (2007-11-01), Seiten 1-3, XP002646193,

## Beschreibung

Die Erfindung betrifft eine Rotorwelle für eine Dampfturbine, umfassend einen Grundkörper und wenigstens einen lokal ausgebildeten Bereich mit einer gegenüber dem Grundkörper veränderten Materialeigenschaft.

Die Anforderungen die an moderne Dampfturbinen gestellt werden nehmen immer weiter zu, so steigt sowohl die Eintrittstemperatur des Frischdampfes als auch der Eintrittsdruck ständig an. Um den Dampf möglichst weit zu entspannen, werden immer größere Abströmquerschnitte des Abdampfgehäuses und damit einhergehend immer höhere Umfangsgeschwindigkeiten der Turbinenschaufeln erforderlich. Den hohen Anforderungen wird zum Teil dadurch Rechnung getragen, dass die Rotorwelle aus hochvergütetem Stahl hergestellt ist.
Bei Kraftwerksturbine werden zudem mehrgehäusige Lösungen eingesetzt, da dadurch die spezifischen Welleneigenschaften auf mehrere Wellen verteilt werden können. Bei Industriedampfturbinen, bei denen der Fokus auf Verfügbarkeit und Kostenauslegung liegt ist eine mehrgehäusige Lösung nicht realisierbar.
Da bei der eingehäusigen Lösung an die Rotorwelle lokal unterschiedlichste Anforderungen gestellt werden, beispielsweise eine große Verschleißfestigkeit im Bereich der Lagerung und eine hohe Temperaturbeständigkeit im Bereich des Dampfeintrittes, werden die Rotorwellen häufig aus mehreren Rotorwellenabschnitten zusammengeschweißt. Die Kosten für Rotorwellen sind aufgrund des teuren Materials sehr hoch. Um die Materialkosten zu reduzieren wird die Rotorwelle in Bereichen die keinen erhöhten Anforderungen erfüllen müssen, aus Rotorwellenabschnitten mit einem günstigen niedrig vergüteten Stahl hergestellt. Trotzdem sind die Kosten für die Rotorwelle immer noch sehr hoch. Darüber hinaus lassen sich die unterschiedliche Materialien häufig schlecht oder gar nicht miteinander verschweißen. Rotorwellen gemäß den Stand der Technik sind aus XP002646193 und EP 1243754 bekannt.

Aufgabe der vorliegenden Erfindung ist es daher, eine Rotorwelle bereitzustellen, die sich durch günstige Material- und Herstellungskosten auszeichnet und die gleichzeitig den unterschiedlichen Anforderungen, die lokal an der Rotorwelle gestellt werden, gerecht wird.

Die Aufgabe wird hinsichtlich der Rotorwelle durch die Merkmale des unabhängigen Patentanspruchs 1 gelöst.

Vorteilhafte Ausgestaltungen und Weiterbildungen, welche einzeln oder in Kombination miteinander einsetzbar sind, sind Gegenstand der Unteransprüche.

Die erfindungsgemäße Rotorwelle für eine Dampfturbine, umfassend einen Grundkörper und wenigstens einen lokal ausgebildeten Bereich mit einer gegenüber dem Grundkörper veränderten Materialeigenschaften, zeichnet sich dadurch aus, dass der lokal ausgebildete Bereich durch heißisostatisches Pressen (HIP) mit dem Grundkörper verbunden ist und der lokal ausgebildete Bereich zur Aufnahme von Turbinenschaufeln ausgebildet ist. Diese lokal ausgebildeten Bereiche und insbesondere die spezielle Form zur Aufnahme der Turbinenschaufel lassen sich auf einfache Weise mit dem HIP-Verfahren realisieren. Dabei kann für den lokal ausgebildeten Bereich ein Werkstoff mit besonders hoher Zugfestigkeit verwendet werden. Gerade im Bereich der Endstufenlaufschaufel treten aufgrund der hohen Fliegkräfte hohe Zugbeanspruchungen der Rotorwelle auf, diese können durch eine spezielle Auswahl von Material in diesem Bereich wirkungsvoll aufgenommen werden. Der Grundkörper muss dabei nicht aus einem besonders hohen zugfesten Stahl hergestellt werden. Das heißisostatische Pressen ermöglicht es, Pulver oder feste Pulverschichten auf Stahlkörper aufzubringen, welche die Oberfläche ganz oder teilweise bedecken und diese dauerhaft mit dem Stahlkörper zu verbinden. Es lassen sich somit Werkstoffkombinationen herstellen, die durch Schweißen nicht erzielt werden können. Beim heißisostatischen Pressen erfolgt der Verbund von Pulverteilchen untereinander sowie zwischen den Pulverteilchen und den Stahlkörper über Festkörperdiffusionsprozesse. Durch das gleichzeitige Sintern und Verdichten der Formkörper in einer HIP-Anlage können fehlerfreie und isotrope Bauteile in einem einzigen Prozessschritt hergestellt werden. Dies steht im Gegensatz zu herkömmlichen Druck gesinterten Bauteilen, die häufig zur Erhöhung der Dichte und somit zur Qualitätsverbesserung noch umgeformt werden müssen.
Das zu verpressende Bauteil wird beim heißisostatischen Pressen in einen deformierbaren, dichten Behälter eingesetzt. Dieser Behälter kommt in einen beheizbaren Druckkessel und anschließend wird das zu verpressende Bauteil bei Temperaturen bis zu 2000° und Drücken von 100 bis 200 MPa unter Schutzgas verdichtet. Da der Gasdruck von allen Seiten auf das Werkstück wirkt, erhält dieses durch das heißisostatische Pressen seine isotrope Eigenschaft. Offene Poren können dabei nicht nachverdichtet werden, da das Gas in diese Poren eindringt. Das Nachverdichten kann nur bei geschlossener Porosität erfolgen.
Durch das HIP-Verfahren ist es somit möglich, eine Rotorwelle für eine Dampfturbine auszubilden, die lokale Bereiche umfasst, die mit einer gegenüber dem Grundkörper der Rotorwelle veränderten Materialeigenschaft aufwarten. Der besondere Vorteil dieses Herstellungsverfahrens, beziehungsweise der durch dieses Herstellungsverfahrens hergestellten Rotorwelle besteht darin, dass der Grundkörper der Rotorwelle aus einem einfachen und preisgünstigen Material hergestellt werden kann und nur die stark beanspruchten Bereiche mit Hilfe des HIP-Verfahrens entsprechend ihrer Anforderung ausgebildet werden können.

Eine vorteilhafte Ausgestaltung der Erfindung sieht vor, dass der lokal ausgebildete Bereich eine größere Härte als der Grundkörper der Rotorwelle aufweist. Lokal ausgebildete Bereiche mit einer größeren Härte als der Grundkörper bieten überall dort Vorteile, wo es auf eine hohe Verschleißfestigkeit ankommt. Insbesondere lassen sich die Bereiche der Rotorwellenlagerung mit einer größeren Härte ausbilden. Dadurch wird trotz des Einsatzes einer Rotorwelle aus einfachem Stahl eine große Verschleißfestigkeit der Rotorwelle erreicht.

Eine weitere vorteilhafte Ausgestaltung der Erfindung sieht vor, dass der lokal ausgebildete Bereich eine größere Temperaturbeständigkeit als der Grundkörper aufweist. Lokal ausgebildete Bereiche mit einer erhöhten Temperaturbeständigkeit bieten besonders im Bereich des Dampfeinlasses große Vorteile. Hier weist der Frischdampf eine hohe Temperatur auf, wodurch besondere Anforderungen an die Temperaturfestigkeit der Rotorwelle gestellt sind.

Das HIP-Verfahren ermöglicht nicht nur die Verwendung von speziell ausgewähltem Material mit besonderen Materialeigenschaften sondern erlaubt darüber hinaus auch eine spezielle Formgebung in den lokalen Bereichen. Das HIP-Verfahren kann somit auch dazu verwendet werden, neben dem Auftragen von Material mit veränderter Materialeigenschaft direkt eine Form zur Aufnahme eines Lagers auszubilden. Hierdurch ist eine spezielle Nachbehandlung der Rotorwelle nicht mehr notwendig, wodurch sich die Fertigung vereinfacht und die Herstellungskosten für die Rotorwelle gesenkt werden können.

Eine weitere bevorzugte Ausgestaltung der Erfindung sieht vor, dass die Rotorwelle lokal ausgebildete Bereiche zur Aufnahme von Turbinenschaufeln aufweisen.

Durch das HIP-Verfahren lassen sich auf einfache Weise alle Anforderungen sowohl hinsichtlich der speziellen Formgebung als auch hinsichtlich der Temperaturbeständigkeit erfüllen.

Ein Verfahren zum Herstellen einer Rotorwelle umfasst die folgenden Verfahrensschritte:
- Herstellen eines Grundkörpers einer Rotorwelle;
- Aufbringen einer Pulverschicht mit einer gegenüber dem Grundkörper veränderten Materialeigenschaft;
- heißisostatisches Verpressen der Pulverschicht mit dem Grundkörper.

Für verschiedene lokal auszubildende Bereiche kann dabei jeweils eine Pulverschicht mit einer anderen Materialeigenschaft gewählt werden. Mit einem Verfahrensschritt lassen sich dabei alle lokalen Bereiche gleichzeitig aufbilden, selbst dann, wenn die einzelnen Bereiche voneinander und auch vom Grundkörper, vollständig andere Materialeigenschaften aufweisen. Das Verfahren ermöglicht somit das Ausbilden einer Rotorwelle mit einem einfachen, preiswerten Grundkörper und verschiedenen lokalen ausgebildeten Bereichen, die jeweils über eine, den Anforderungen entsprechende Materialeigenschaft verfügen. Die entsprechende Materialeigenschaft kann dabei beispielsweise eine größere Härte, eine größere Temperaturbeständigkeit oder eine größere Zugfestigkeit sein. Dadurch, dass das Verfahren es ermöglicht die unterschiedlichen Materialeigenschaften mit einem einzigen Verfahrensschritt herzustellen, ist das Verfahren gegenüber dem bisherigen geschweißten Rotorwellen schneller und preiswerter.

Ein weiteres Verfahren zum Herstellen einer Rotorwelle umfasst die folgenden Verfahrensschritte:
- Herstellen eines Grundkörpers einer Rotorwelle;
- Aufbringen eines pulvermetallurgischen vorgefertigten Formrohlings mit einer gegenüber dem Grundkörper veränderten Materialeigenschaft;
- heißisostatisches Verpressen des Formrohlings mit dem Grundkörper.

Durch die Verwendung eines vorgefertigten Formrohlings im Gegensatz zu dem zuvor beschriebenen Aufbringen eines Pulvers, vereinfacht sich das Verfahren. Der Formrohling hat bereits die entsprechende Form und wird einfach auf den Grundkörper der Rotorwelle aufgeschoben. Anschließend erfolgt das heißisostatische Verpressen. Die Formrohlinge weisen dabei jeweils die lokal gewünschte Materialeigenschaft auf. Das heißisostatische Verpressen aller Formrohlinge kann in einem einzigen Verfahrensschritt erfolgen.

Das heißisostatische Verpressen erfolgt bei beiden Verfahren jeweils bei Temperaturen von bis zu 2000° und einem Gasdruck von 100 bis 200 MPa.

Zusammenfassend lässt sich somit festhalten, das die vorgestellte Erfindung es ermöglicht, eine Rotorwelle für eine Dampfturbine bereitzustellen, die einem Grundkörper aus einem einfachen, preiswerten Stahl aufweist und die lokal ausgebildeten Bereichen mit veränderten und an die speziellen Anforderungen angepasste Materialeigenschaften besitzt. Die lokal ausgebildeten Bereiche können dabei an die speziellen Erfordernisse in diesem Bereich der Rotorwelle angepasst werden. Beispielsweise lässt sich durch das heißisostatische Pressen ein lokaler Bereich mit einer größeren Härte, einer größeren Zugfestigkeit oder einer größeren Temperaturbeständigkeit gegenüber dem Grundkörper herstellen. Das heißisostatische Pressen ermöglicht den Grundkörper mit Materialien zu verbinden, die durch Schweißen nicht verbindbar sind.

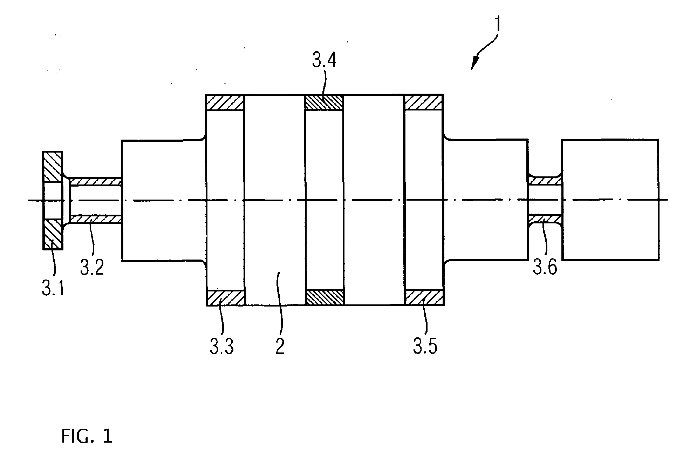

Ein Ausführungsbeispiel und weitere Vorteile der Erfindung werden im Folgenden anhand der Zeichnung erläutert.

Die Figur zeigt schematisch einen Axialschnitt durch eine erfindungsgemäße Rotorwelle 1.

Die Rotorwelle 1 umfasst einen Grundkörper 2. Der Grundkörper 2 ist aus einem niedrig vergüteten Stahl herstellt. Um den unterschiedlichen Anforderungen, die an die Rotorwelle 1 gestellt werden gerecht zu werden, weist die Rotorwelle 1 lokal ausgebildete Bereiche 3.1, 3.2, 3.3, 3.4, 3.5 mit gegenüber dem Grundkörper 2 veränderten Materialeigenschaften auf. Die lokal ausgebildeten Bereiche 3.1, 3.2, 3.3, 3.4, 3.5, 3.6 sind dabei durch heißisostatisches Pressen (HIP) fest mit dem Grundkörper 2 verbunden. Die lokal ausgebildeten Bereiche 3.1, 3.2, 3.3, 3.4, 3.5, 3.6 können dabei durch Auswahl eines entsprechenden Materials an die unterschiedlichen Anforderungen angepasst werden.
Der lokal ausgebildete Bereich 3.1 liegt nahe dem Frischdampfeinlass und muss daher hohen Temperaturen standhalten. Daher wird für diesen Bereich ein Material mit einer großen Temperaturbeständigkeit ausgewählt. Bei den lokal ausgebildeten Bereichen 3.2, 3.3, 3.5 und 3.6 handelt es sich um Lagerstellen. Die Lagerstellen müssen vor allem eine große Härte und Verschleißfestigkeit aufweisen, um eine schnelle Abnutzung zu verhindern. Für diese Bereiche wird deshalb ein Material mit einer großen Härte ausgewählt. Der lokal ausgebildete Bereich 3.4 wiederum dient zur Aufnahme von Turbinenschaufeln und muss daher eine erhöhte Zugfestigkeit aufweisen. Für diesen lokalen Bereich wird somit ein Werkstoff mit hoher Zugfestigkeit ausgewählt.

Die lokal ausgebildeten Bereiche 3.1, 3.2, 3.3, 3.4, 3.5, 3.6 können, obwohl sie unterschiedliche Materialeigenschaften aufweisen, in einem einzigen Verfahrensschritt durch heißisostatisches Pressen mit dem Grundkörper verbunden werden.

Nachfolgend werden zwei Verfahren zum Herstellen einer solchen Rotorwelle 1 erläutert. Bei dem ersten Verfahren wird zunächst der Grundkörper 2 der Rotorwelle 1 durch Gießen hergestellt. Bei großen Wellen kann die Welle auch mehrteilig ausgebildet und durch Schweißen zusammengefügt sein. Nach dem Herstellen des Grundkörpers 2 wird an den lokal auszubildenden Bereichen 3.1, 3.2, 3.3, 3.4, 3.5, 3.6 eine Pulverschicht mit einer gegenüber dem Grundkörper 2 veränderten Materialeigenschaft aufgebracht. Die Materialeigenschaft der Pulverschicht ist entsprechend den Anforderungen in diesem lokalen Bereich ausgewählt. Nach Aufbringen der entsprechenden Pulverschicht erfolgt das heißisostatische Verpressen der Pulverschicht mit dem Grundkörper 2. Beim heißisostatischen Verpressen erfolgt der Verbund von Pulverteilchen untereinander sowie auch zwischen dem Pulverteilchen und dem Grundkörper 2 über Festkörperdiffusionsprozesse. Durch das Gleichzeitige sintern der Pulverteilchen und Verdichten der Formkörper können fehlerfreie und isotrope Bauteile in einem Prozessschritt hergestellt werden. Das Verpressen erfolgt dabei in einem deformierbaren, dichten Behälter. Dieser Behälter kommt in einen beheizten Druckkessel und die Rotorwelle wird bei Temperaturen bis zu 2000° und Drücken von 100 bis 200 MPa unter Schutzgas verdichtet. Der Gasdruck wirkt dabei von allen Seiten auf das Bauteil, so dass das Bauteil seine isotropen Eigenschaften erhält. Dabei ist zu beachten, dass offene Poren nicht nachverdichtet werden können, da das Gas beim Verpressen in diese Poren eindringt. Das Nachverdichten kann nur bei geschlossener Porosität erfolgen.
Nach dem heißisostatischen Verpressen ist die Pulverschicht gesintert und die gesinterte Pulverschicht ist fest mit dem Grundkörper 2 der Rotorwelle 1 verbunden. Durch das heißisostatische Pressen kann somit eine Rotorwelle auf besonders einfache Weise hergestellt werden, die lokal ausgebildete Bereiche mit vollkommen unterschiedlichen Eigenschaften, beispielsweise einer großen Härte, einer hohen Zugfestigkeit oder einer großen Temperaturbeständigkeit aufweisen. Das Grundmaterial der Rotorwelle 1 kann dadurch aus einfachen und niedrig vergüteten Stahl ausgebildet werden. Hierdurch sinkt der Materialkosten der Rotorwelle erheblich. Alle lokal ausgebildeten Bereiche können in einem Verfahrensschritt heißisostatisch verpresst werden.

Bei einem weiteren Verfahren zum Herstellen einer Rotorwelle 1 mit lokal ausgebildeten Bereichen 3.1, 3.2, 3.3, 3.4, 3.5, 3.6, wird anstelle der Pulverschicht ein Pulvermetallurgisch vorgefertigter Formrohling mit einer gegenüber dem Grundkörper 2 veränderten Materialeigenschaft auf den Grundkörper 2 aufgebracht. Die Verwendung von vorgefertigten Formrohlingen erleichtert die Handhabung und vereinfacht somit das gesamte Verfahren zum Herstellen der Rotorwelle 1. Ansonsten unterscheidet sich das Verfahren nicht gegenüber dem bereits vorgestellten Verfahren. Insbesondere erfolgt das heißisostatische Verpressen bei den selben Temperaturen und Drücken. Zusammenfassend kann somit festgehalten werden, dass die erfindungsgemäße Rotorwelle das Ausbilden von lokal ausgebildeten Bereichen mit unterschiedlichen und an die Anforderungen angepassten Materialeigenschaften ermöglicht, wobei die lokal ausgebildeten Bereiche durch heißisostatisches Pressen mit dem Grundkörper 2 auf einfache Weise und in einem einzigen Verfahrensschritt verbunden werden können. Durch die lokal ausgebildeten und an die Erfordernisse in diesem Bereich angepassten Bereiche kann der Grundkörper der Rotorwelle aus einem einfachen und preiswerten Material gefertigt werden. Hierdurch sinken die Materialkosten für die Rotorwelle erheblich, bei gleichzeitig verbesserten Eigenschaft. Eine Rotorwelle die die verschiedensten Materialeigenschaften wie Härte, Temperaturbeständigkeit und Zugfestigkeit miteinander vereint ist bislang nicht erhältlich. Die vorgestellten Verfahren zum Herstellen einer solchen Rotorwelle sich einfache und ermöglichen das Verpressen aller lokal ausgebildeten Bereiche in einem einzigen Verfahrensschritt.

## Patentansprüche

1. Rotorwelle (1) für eine Dampfturbine, umfassend einen Grundkörper (2) und wenigstens einen lokal ausgebildeten Bereichen (3) mit einer gegenüber dem Grundkörper (2) veränderten Materialeigenschaft, **dadurch gekennzeichnet, dass**
der lokal ausgebildete Bereich (3) durch heißisostatisches Pressen (HIP) mit dem Grundkörper (2) verbunden ist und wobei der lokal ausgebildete Bereich (3) zur Aufnahme von Turbinenschaufeln ausgebildet ist.

2. Rotorwelle (1) nach Anspruch 1,
**dadurch gekennzeichnet, dass**
der lokal ausgebildete Bereich (3) eine größere Härte als der Grundkörper (2) aufweist.

3. Rotorwelle (1) nach Anspruch 1,
**dadurch gekennzeichnet, dass**
der lokal ausgebildete Bereich (3) eine größere Zugfestigkeit als der Grundkörper (2) aufweist.

4. Rotorwelle (1) nach Anspruch 1,
**dadurch gekennzeichnet, dass**
der lokal ausgebildete Bereich (3) als eine größere Temperaturbeständigkeit als der Grundkörper (2) aufweist.

## Claims

1. Rotor shaft (1) for a steam turbine, comprising a base body (2) and at least one locally embodied region (3) having an altered material property compared to the base body (2), **characterised in that** the locally embodied region (3) is joined to the base body (2) by means of hot isostatic pressing (HIP) and **in that** the locally embodied region (3) is embodied for accommodating turbine blades.

2. Rotor shaft (1) according to claim 1,
**characterised in that**
the locally embodied region (3) has a greater hardness than the base body (2).

3. Rotor shaft (1) according to claim 1,
**characterised in that**
the locally embodied region (3) has a greater tensile strength than the base body (2).

4. Rotor shaft (1) according to claim 1,
**characterised in that**
the locally embodied region (3) has a greater temperature resistance than the base body (2).

## Revendications

1. Arbre de rotor (1) pour une turbine à vapeur, comprenant un corps de base (2) et au moins une zone localisée (3) avec une propriété du matériau modifiée par rapport au corps de base (2), **caractérisé en ce que** la zone localisée (3) est reliée au corps de base (2) par compression isostatique à chaud (HIP) et **en ce que** la zone localisée (3) est conçue pour recevoir des aubes de turbine.

2. Arbre de rotor (1) selon la revendication 1,
**caractérisé en ce que**
la zone localisée (3) présente une plus grande dureté que le corps de base (2).

3. Arbre de rotor (1) selon la revendication 1,
**caractérisé en ce que**
la zone localisée (3) présente une plus grande résistance à la traction que le corps de base (2).

4. Arbre de rotor (1) selon la revendication 1,
**caractérisé en ce que**
la zone localisée (3) présente une plus grande résistance thermique que le corps de base (2).
